# EUROPÄISCHE PATENTSCHRIFT

(11) **EP 3 511 289 B1**
(45) Veröffentlichungstag und Bekanntmachung des Hinweises auf die Patenterteilung: **20.12.2023**
(21) Anmeldenummer: 19151788.7
(22) Anmeldetag: 15.01.2019
(51) Int. Cl.: B66F 17/00, B66F 9/075, G01S 13/93, G01S 15/93, G01S 17/93

(54) **VERFAHREN ZUR STEUERUNG EINES FLURFÖRDERZEUGS SOWIE EIN SYSTEM AUS EINER ÜBERGEORDNETEN STEUEREINHEIT UND EINEM FLURFÖRDERZEUG**
METHOD FOR CONTROLLING AN INDUSTRIAL TRUCK AND A SYSTEM COMPRISING A SUPERORDINATE CONTROL UNIT AND AN INDUSTRIAL TRUCK
PROCÉDÉ DE COMMANDE D'UN CHARIOT DE MANUTENTION AINSI QUE SYSTÈME COMPOSÉ D'UNE UNITÉ DE COMMANDE SUPÉRIEURE ET D'UN CHARIOT DE MANUTENTION

(30) Priorität: 15.01.2018 DE 102018100758
(43) Veröffentlichungstag der Anmeldung: 17.07.2019
(73) Patentinhaber: Jungheinrich Aktiengesellschaft, 22047 Hamburg (DE)
(72) Erfinder: Flottran, Dennis, 23881 Breitenfelde (DE); Meyer, Hinrich, 21406 Barenstedt (DE)
(74) Vertreter: Hauck Patentanwaltspartnerschaft mbB

(56) Entgegenhaltungen:
- EP-A1- 2 722 687
- EP-A1- 3 035 074
- DE-A1- 4 433 786
- DE-A1- 10 146 465
- DE-A1-102010 028 911
- DE-A1-102015 111 613
- DE-A1-102015 224 309
- US-A1- 2011 093 134
- US-A1- 2015 170 498

## Beschreibung

Die Erfindung betrifft ein Verfahren zur Steuerung eines Flurförderzeugs sowie ein System aus einer übergeordneten Steuereinheit und einem Flurförderzeug.

Flurförderzeuge zum Transport von Lasten werden beispielsweise in Lager- oder Produktionshallen eingesetzt. Insbesondere bei autonom und automatisch fahrenden Flurförderzeugen ist das Flurförderzeug zumindest teilweise mit einem oder mehreren Schutzfeldern umgeben. Diese Schutzfelder werden von an dem Flurförderzeug angebrachten Sensoren erzeugt und decken flächige Bereiche beispielsweise in Fahrtrichtung vor dem Flurförderzeug ab. Bei Eintritt eines unbekannten Objekts, beispielsweise einer Person oder einem Gegenstand, in das Schutzfeld wird das Flurförderzeug gestoppt oder zunächst verlangsamt. Das Schutzfeld dient somit dem Kollisionsschutz.

Diese Schutzfelder sollten an die jeweils vorliegende Fahrsituation des Flurförderzeugs angepasst sein, um eine möglichst hohe Betriebssicherheit zu erreichen. So kann beispielsweise bei einer Kurvenfahrt des Flurförderzeugs in Abhängigkeit von dem durch das Flurförderzeug eingeschlagenen Lenkwinkel das Schutzfeld entsprechend der geänderten Fahrtrichtung positioniert werden. Auch kann das Schutzfeld in Abhängigkeit von der Geschwindigkeit des Flurförderzeugs sich unterschiedlich weit in Fahrtrichtung des Flurförderzeugs erstrecken. Der aktuelle Lenkwinkel bzw. die aktuelle Geschwindigkeit des Flurförderzeugs können hierbei über am Flurförderzeug vorgesehene Sensoren ermittelt werden. Insbesondere bei hohen Geschwindigkeiten oder bei engen Kurven kann es jedoch weiterhin zu Gefahrensituationen kommen.

Ein System aus einer übergeordneten Steuereinheit und mehreren Flurförderzeugen ist aus US 2011 009 31 34 A1 bekannt. Hierbei ermittelt ein Lagerverwaltungssystem anhand der Position der in dem Lager fahrenden Flurförderzeuge deren Trajektorien und bestimmt hieraus mögliche Überschneidungsbereiche, um Kollisionen zu verhindern.

DE 10 2015 111 613 A1 betrifft ein Verfahren zur Erfassung von Hindernissen in der Umgebung eines Flurförderzeugs wobei das Flurförderzeug zur Überwachung der Umgebung einen Sensor aufweist, der mit einer Steuerungsvorrichtung verbunden ist und durch Auswerten der Daten des Sensors einen Überwachungsbereich erfassen kann.

Aus US 2015/170498 A1 ist ein Flurförderzeug bekannt geworden, das Gefahren in seiner Umgebung erfasst und entsprechend eines Fahrlevels eine Vielzahl von verschiedenen Sicherheitszonen aktiviert. Je größer die Gefahrenzone ist, umso mehr Sicherheitszonen werden aktiviert, um eine Kollision mit einer Person zu vermeiden.

Der Erfindung liegt die Aufgabe zugrunde, ein Verfahren zur Steuerung eines Flurförderzeugs zur Verfügung zu stellen, die einen besseren Kollisionsschutz gewährleisten.

Die Erfindung löst die Aufgabe durch ein Verfahren gemäß Anspruch 1.

Vorteilhafte Ausgestaltungen sind Gegenstand der Unteransprüche, der Beschreibung sowie der Figuren.

Das erfindungsgemäße Verfahren zur Steuerung mindestens eines Flurförderzeugs umfasst die Schritte: Bestimmen der Position des Flurförderzeugs innerhalb einer vorbekannten, durch das Flurförderzeug abzufahrenden Wegstrecke, Ermitteln einer bevorstehenden Fahrsituation in Abhängigkeit von der Position des Flurförderzeugs sowie in Abhängigkeit von einem von dem Flurförderzeug auszuführenden Fahrauftrag, Einstellen eines durch das Flurförderzeug überwachten Schutzfelds auf Grundlage der bevorstehenden Fahrsituation noch bevor das Flurförderzeug die Fahrsituation erreicht.

Das mindestens eine Flurförderzeug kann beispielsweise ein Kommissionierfahrzeug sein. Auch kann das mindestens eine Flurförderzeug ein Schleppwagen eines Routenzugs sein, wobei der Schleppwagen über einen oder mehrere Anhänger verfügt. Insbesondere ist das Verfahren zur Steuerung mehrerer Flurförderzeuge in einer gemeinsamen Lager- oder Produktionshalle geeignet. Indem die Position des mindestens einen Flurförderzeugs innerhalb der aufgrund des Fahrauftrags abzufahrenden Wegstrecke bestimmt wird, kann ermittelt werden, welche Fahrsituation dem Flurförderzeug als nächstes bevorsteht. Eine solche Fahrsituation kann jegliche Situation sein, die eine Änderung des Betriebszustands des Flurförderzeugs erfordert, beispielsweise kann als Fahrsituation eine Kurvenfahrt oder eine Fahrt mit erhöhter Geschwindigkeit vorliegen. Erfindungsgemäß wird das Schutzfeld des Flurförderzeugs entsprechend der bevorstehenden Fahrsituation eingestellt. Einstellen bedeutet hierbei, dass ein bereits bestehendes Schutzfeld beispielsweise in seiner Größe und/oder in seiner Position verändert wird und/oder, dass ein noch nicht bestehendes Schutzfeld erzeugt wird. Das Schutzfeld kann insbesondere durch eine Kollisionsschutzeinrichtung des Flurförderzeugs erzeugt werden, wobei ein oder mehrere Sensoren zur Erzeugung des veränderten oder des erzeugten Schutzfeldes eingesetzt werden können. Wie eingangs erläutert, wird das Flurförderzeug bei Eintritt eines unbekannten Objekts, beispielsweise einer Person oder einem Gegenstand, in das Schutzfeld gestoppt bzw. verlangsamt, um Kollisionen zu verhindern. Erfindungsgemäß erfolgt eine vorausschauende Schutzfeldpositionierung noch bevor das Flurförderzeug in die jeweilige Fahrsituation eintritt. Das Schutzfeld wird nicht, wie eingangs erläutert, erst durch Änderung der Fahrsituation des Flurförderzeugs, also beispielsweise durch einen Lenkeinschlag, sondern bereits vor Eintritt dieser Situation angepasst. Hierdurch wird die Sicherheit erhöht, da Kollisionen umso zuverlässiger vermieden werden können. Insbesondere ermöglicht ein derartig vorausschauendes Fahren auch ein Betreiben des Flurförderzeugs bei höheren Geschwindigkeiten. So kann beispielsweise eine Kurve mit größerer Geschwindigkeit durchfahren werden. Somit kann die Umschlagsmenge erhöht und gleichzeitig eine besonders hohe Sicherheit für Personen, Flurförderzeug und Ladung gewährleistet werden. Der Fahrauftrag ist von einer übergeordneten Steuereinrichtung an das Flurförderzeug übermittelt und in einer Fahrzeugsteuerung hinterlegt worden.

Nach einer Ausgestaltung wird die Position des Flurförderzeugs mittels einer übergeordneten Steuereinheit bestimmt, die bevorstehende Fahrsituation durch die übergeordnete Steuereinheit ermittelt und ein Stellbefehl durch die übergeordnete Steuereinheit zum Einstellen des Schutzfeldes an das Flurförderzeug gesendet. Die übergeordnete Steuereinheit ist von dem Flurförderzeug unabhängig ausgebildet, beispielsweise kann es sich um ein Lagerverwaltungssystem handeln. Die übergeordnete Steuereinheit ist dabei dazu ausgebildet, die Position des Flurförderzeugs innerhalb des Fahrauftrags, also innerhalb der aufgrund des Fahrauftrags abzufahrenden Wegstrecke, zu bestimmen. Das Flurförderzeug kann seine aktuelle Position beispielsweise an die Steuereinheit senden. Auch kann die aktuelle Position des Flurförderzeugs der übergeordneten Steuereinheit aufgrund des aktuellen Fahrauftrags des Flurförderzeugs bekannt sein. Die vorbekannte, durch das Flurförderzeug abzufahrende Wegstrecke kann als Teil des aktuellen Fahrauftrags in der übergeordneten Steuereinheit und/oder in dem Flurförderzeug hinterlegt sein. Dieser Fahrauftrag kann insbesondere durch die übergeordnete Steuereinheit an das mindestens eine Flurförderzeug gesendet werden. Nach dieser Ausgestaltung erfolgt also eine Koordination des Verfahrens durch die übergeordnete Steuereinheit. Die Steuereinheit, beispielsweise das Lagerverwaltungssystem, kann dabei insbesondere mehrere Flurförderzeuge koordinieren, die autonom fahren oder auch manuell gesteuert werden.

Nach einer weiteren Ausgestaltung ist das mindestens eine Flurförderzeug ein automatisch oder autonom fahrendes Flurförderzeug. Das Flurförderzeug wird hierbei vollständig von einer übergeordneten Steuereinheit, beispielsweise einem zentralen Lagerverwaltungssystem, gesteuert. Gegenüber der vorherigen Ausgestaltung wird dann nicht (nur) das erfindungsgemäße Verfahren durch die übergeordnete Steuereinheit koordiniert, sondern das Flurförderzeug aufgrund von durch die übergeordnete Steuereinheit übermittelten Steuerbefehlen ohne Fahrer betrieben. Hierbei ist ein erfindungsgemäßes, vorrausschauendes Einstellen der Schutzfelder von besonderer Bedeutung, da im Notfall kein Fahrer eingreifen kann.

Nach einer Ausgestaltung ist die bevorstehende Fahrsituation eine Kurvenfahrt, wobei das Schutzfeld bereits vor Eintritt des Flurförderzeugs in die Kurvenfahrt in Richtung der Kurve positioniert wird. Wie bereits oben erwähnt, kann die bevorstehende Fahrsituation eine Kurvenfahrt sein. Im Gegensatz zu den eingangs beschriebenen Systemen erfolgt eine situationsadäquate Positionierung des Schutzfeldes jedoch nicht erst mit dem Lenkeinschlag des Flurförderzeugs sondern bereits vor Eintritt des Flurförderzeugs in die Kurvenfahrt, beispielsweise also bei einer zuvor erfolgenden Geradeausfahrt. Hierbei kann eine Positionierung des Schutzfeldes beispielsweise derart erfolgen, dass ein Schutzfeld in Richtung der Kurve in Fahrtrichtung seitlich vom Flurförderzeug aktiviert wird. Dieses seitliche Schutzfeld kann dabei insbesondere zusätzlich zu einem sich in Fahrtrichtung vor dem Flurförderzeug erstreckenden Schutzfeld geschaltet werden. Auch kann vorgesehen sein, dass sich ein in Fahrtrichtung vor dem Flurförderzeug erstreckendes Schutzfeld aufgrund des bevorstehenden Eintritts in die Kurvenfahrt in Richtung der zu fahrenden Kurve verschiebt oder verformt.

Nach einer weiteren Ausgestaltung ist die bevorstehende Fahrsituation eine Fahrt mit erhöhter Geschwindigkeit, wobei das Schutzfeld bereits vor Eintritt des Flurförderzeugs in die Fahrt mit erhöhter Geschwindigkeit einen größeren Bereich vor dem Flurförderzeug abdeckt oder in Fahrtrichtung nach vorne verlagert wird. Wie ebenfalls oben erwähnt, kann die Fahrsituation eine Fahrt mit erhöhter Geschwindigkeit sein. Im Gegensatz zu den bekannten Systemen wird jedoch nicht, beispielsweise über einen an einem Rad des Flurförderzeugs vorgesehenen Encoder, die Geschwindigkeit des Flurförderzeugs gemessen und davon abhängig das Schutzfeld positioniert. Stattdessen erfolgt erfindungsgemäß das Einstellen des Schutzfeldes bereits vorausschauend vor einer Beschleunigung des Flurförderzeugs. Das Schutzfeld wird dabei abhängig von der Geschwindigkeitsvorgabe für den bevorstehenden Streckenabschnitt der vorbekannten Wegstrecke erweitert, so dass es weiter vor das Flurförderzeug reicht. Auch kann das Schutzfeld in Fahrtrichtung des Flurförderzeugs weiter nach vorne verschoben werden, wobei sich auch hierbei die Größe des Schutzfelds ändern kann. Hierdurch wird erreicht, dass ein Hindernis, beispielsweise eine Person oder ein Objekt, bereits frühzeitig in das Schutzfeld eintritt und das Flurförderzeug somit frühzeitig einen Bremsvorgang einleiten kann.

Nach einer weiteren Ausgestaltung wird das überwachte Schutzfeld auch nach dem Verlassen der jeweiligen Fahrsituation weiter überwacht. Es kann folglich nicht nur, wie erfindungsgemäß vorgesehen, ein vorausschauendes Einstellen des Schutzfelds vorgesehen sein, sondern auch ein rückschauendes. So kann beispielsweise nach einer Kurvenfahrt des Flurförderzeugs weiterhin das Schutzfeld für die Kurvenfahrt für einen gewissen Zeitraum aktiviert bleiben, auch wenn das Flurförderzeug sich zumindest abschnittsweise wieder in einer Geradeausfahrt befindet. Dies ist insbesondere sinnvoll, wenn das Flurförderzeug ein Schleppwagen eines Routenzugs ist, wobei der Schleppwagen über mindestens einen Anhänger verfügt. Nach einer Ausgestaltung wird dann das überwachte Schutzfeld auch nach dem Verlassen der jeweiligen Fahrsituation durch den Schleppwagen weiter überwacht bis der mindestens eine Anhänger ebenfalls die jeweilige Fahrsituation verlassen hat. Hiermit kann berücksichtigt werden, dass insbesondere bei Routenzügen nach einer Kurvenfahrt der Schleppwagen sich häufig bereits wieder in der Geradeausfahrt befindet, während der oder die Anhänger noch die Kurve durchfahren. Insbesondere wenn die nachfolgenden Anhänger die durchfahrene Kurve schneiden, kann somit eine höhere Kollisionssicherheit erreicht werden.

Nach einer weiteren Ausgestaltung wird der vom Flurförderzeug eingeschlagene Lenkwinkel überwacht und das Flurförderzeug gestoppt, wenn der Lenkwinkel einen durch den Fahrauftrag vorgegebenen Maximalwinkel überschreitet. Hierfür kann eine Sensoreinheit, beispielsweise ein Winkelencoder, zur Ermittlung des eingeschlagenen Lenkwinkels am Flurförderzeug vorgesehen sein. Der vorgegebene Maximalwert für den Lenkwinkel kann als Teil des Fahrauftrags insbesondere von einer übergeordneten Steuereinrichtung an das Flurförderzeug übermittelt worden sein. Der Fahrauftrag kann in einer Fahrzeugsteuerung hinterlegt sein. Die übergeordnete Steuereinheit oder die Fahrzeugsteuerung des Flurförderzeugs gleicht den aktuellen Lenkwinkel mit dem vorgegebenen Maximalwinkel ab. Überschreitet der vom Flurförderzeug eingeschlagene Lenkwinkel den Maximalwert, so wird durch die Kollisionsschutzeinrichtung das Flurförderzeug gestoppt. Es kann somit verhindert werden, dass das Flurförderzeug beim Einschlagen eines zu großen Lenkwinkels - beispielsweise aufgrund eines Fehlerfalls - eine Kollision verursacht.

Nach einer Ausgestaltung wird die vom Flurförderzeug eingeschlagene Lenkrichtung überwacht und das Flurförderzeug gestoppt, wenn die Lenkrichtung von einer durch den Fahrauftrag vorgegebenen Lenkrichtung abweicht. Auch hier kann entsprechend eine Sensoreinheit, beispielsweise ein Encoder, vorgesehen sein zur Überwachung der eingeschlagenen Lenkrichtung. Dieser Sensor kann insbesondere auch zur Überwachung des eingeschlagenen Lenkwinkels dienen, wie oben erwähnt. Die vorgegebene Lenkrichtung ergibt sich aus dem Fahrauftrag, der insbesondere von einer übergeordneten Steuereinrichtung an das Flurförderzeug übermittelt worden sein kann. Der Fahrauftrag kann, wie erläutert, in einer Fahrzeugsteuerung hinterlegt sein. Die übergeordnete Steuereinheit oder die Fahrzeugsteuerung des Flurförderzeugs gleicht die eingeschlagene Lenkrichtung mit der vorgegebenen Lenkrichtung ab. Sollte die eingeschlagene Lenkrichtung von der vorgegebenen Lenkrichtung abweichen, wird das Flurförderzeug gestoppt. Somit kann auch bei einer fehlerhaften Lenkung in eine nicht vorgesehene Richtung, beispielsweise nach rechts anstatt nach links, eine Kollision vermieden werden.

Nach einer weiteren Ausgestaltung wird die vom Flurförderzeug eingenommene Geschwindigkeit überwacht und das Flurförderzeug gestoppt, wenn die Geschwindigkeit von einer durch den Fahrauftrag vorgegebenen Maximalgeschwindigkeit abweicht. Die Geschwindigkeit kann beispielsweise über einen an einem der Räder vorgesehenen Encoder ermittelt werden. Die vorgegebene Maximalgeschwindigkeit ergibt sich aus dem Fahrauftrag, der insbesondere von einer übergeordneten Steuereinrichtung an das Flurförderzeug übermittelt worden sein kann. Der Fahrauftrag kann, wie erläutert, in einer Fahrzeugsteuerung hinterlegt sein. Die übergeordnete Steuereinheit oder die Fahrzeugsteuerung des Flurförderzeugs gleicht die aktuelle Geschwindigkeit mit der Maximalgeschwindigkeit ab, wobei bei einem Überschreiten der Maximalgeschwindigkeit das Flurförderzeug gestoppt und somit die Kollisionssicherheit erhöht wird.

Nach einer weiteren Ausgestaltung wird der vom Flurförderzeug eingeschlagene Lenkwinkel überwacht und das Schutzfeld bei einer Kurvenfahrt des Flurförderzeugs abhängig von einem diskreten Lenkwinkel positioniert. Das Schutzfeld für die Kurvenfahrt wird somit abhängig von dem Lenkwinkel eingestellt. Dies erfolgt jedoch nicht kontinuierlich, sondern diskret. Das Schutzfeld kann folglich mit zunehmendem Lenkwinkel in mehreren Stufen verstellt werden, beispielsweise können drei diskrete Lenkwinkel bei 30°, 60° und 90° vorgesehen sein, wobei bei einem Lenkwinkel von 30° das Schutzfeld in eine erste Position gestellt wird, bei einem Lenkwinkel von 60° das Schutzfeld in eine zweite Position gestellt wird und bei einem Lenkwinkel von 90° das Schutzfeld in eine dritte Position gestellt wird. Für jeden der Lenkwinkelbereiche kann ein Abgleich mit einem - beispielsweise durch den Fahrauftrag - vorgegebenen Lenkwinkel erfolgen und bei einer Abweichung ein Stoppen des Flurförderzeugs eingeleitet werden.

Das System umfasst eine übergeordnete Steuereinheit sowie mindestens ein Flurförderzeug, wobei die übergeordnete Steuereinheit dazu ausgebildet ist, die Position des Flurförderzeugs innerhalb einer vorbekannten, durch das Flurförderzeug abzufahrenden Wegstrecke zu bestimmen, eine bevorstehende Fahrsituation in Abhängigkeit von der Position des Flurförderzeugs sowie in Abhängigkeit von einem von dem Flurförderzeug auszuführenden Fahrauftrag zu ermitteln, sowie ein durch das Flurförderzeug überwachtes Schutzfeld auf Grundlage der bevorstehenden Fahrsituation einzustellen noch bevor das Flurförderzeug die Fahrsituation erreicht.

Das System ist zur Durchführung des erfindungsgemäßen Verfahrens geeignet. Insbesondere ist das mindestens eine Flurförderzeug ein autonom fahrendes Flurförderzeug.

Ein Ausführungsbeispiel der Erfindung wird im Folgenden anhand von Figuren erläutert. Es zeigen:
- Figur 1: ein Flurförderzeug in einer seitlichen Ansicht, sowie
- Figur 2: mehrere Ansichten des Flurförderzeugs aus Figur 1 von oben während einer Kurvenfahrt.

Soweit nichts anderes angegeben ist, bezeichnen im Folgenden gleiche Bezugszeichen gleiche Gegenstände

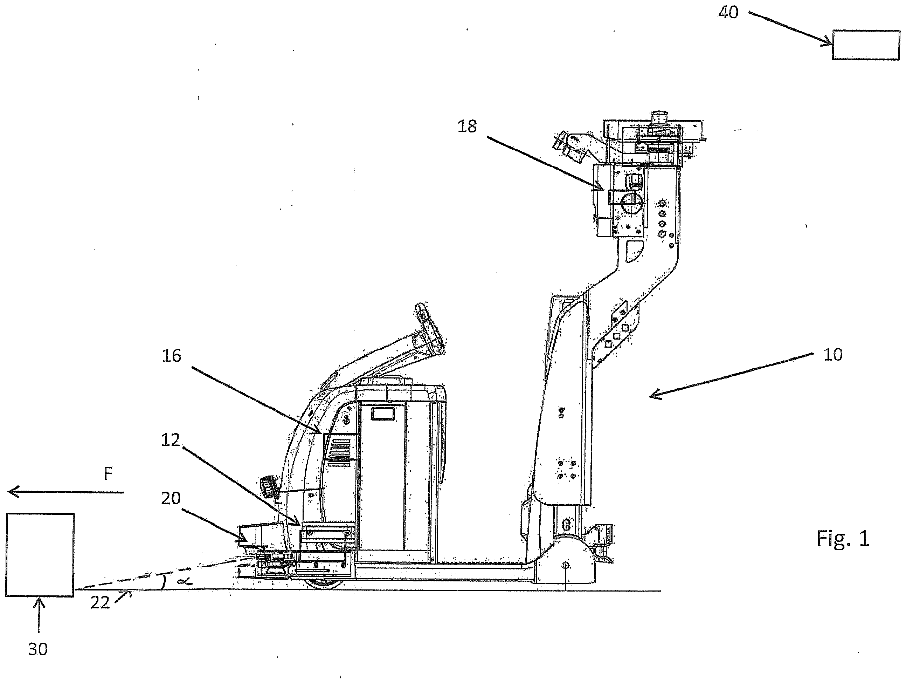

Figur 1 zeigt ein Flurförderzeug 10 mit einem Antriebsteil 12. Das Flurförderzeug 10 ist als Schlepper ohne ein Lastteil ausgebildet. Das Flurförderzeug 10 verfügt weiterhin über eine schematisch dargestellte Fahrzeugsteuerung 16, eine schematisch dargestellte Sende- und Empfangseinheit 18 sowie eine Kollisionsschutzeinrichtung 20. Die Kollisionsschutzeinrichtung 20 dient dem Erzeugen von Schutzfeldern 22, 24 in der Umgebung des Flurförderzeugs zwecks Überwachung der Umgebung auf Hindernisse, wie später noch erläutert wird. Über die Sende- und Empfangseinheit 18 steht das Flurförderzeug 10 mit einer schematisch dargestellten übergeordneten Steuereinheit 40 in Kontakt. Die übergeordnete Steuereinheit 40 kann beispielsweise ein zentrales Lagerverwaltungssystem sein. In Figur 1 ist weiterhin ein Hindernis 30 zu erkennen, welches in einer Fahrtrichtung F vor dem Flurförderzeug 10 liegt. Nähert sich das Flurförderzeug 10 dem Hindernis 30, so tritt dieses in das vor dem Flurförderzeug liegende erste Schutzfeld 22 ein, woraufhin die Fahrzeugsteuerung 16 einen Bremsvorgang des Flurförderzeugs einleitet.

Die übergeordnete Steuereinheit 40 sendet einen Fahrauftrag an das Flurförderzeug 10, welches diesen über die Sende- und Empfangseinheit 18 empfängt und an die Fahrzeugsteuerung 16 weitergibt. Auf Grundlage des Fahrauftrags steuert die Fahrzeugsteuerung 16 das Flurförderzeug 10 durch eine Lager- oder Produktionshalle. Das Flurförderzeug 10 durchläuft hierbei mehrere aufeinanderfolgende Fahrsituationen. In regelmäßigen Abständen sendet das Flurförderzeug 10 seine Position innerhalb des Fahrauftrags, also innerhalb der aufgrund des Fahrauftrags abzufahrenden Wegstrecke, an die übergeordnete Steuereinheit 40. Die übergeordnete Steuereinheit 40 ermittelt aufgrund des Fahrauftrags sowie aufgrund der aktuellen Position des Flurförderzeugs 10 die als nächstes bevorstehende Fahrsituation und sendet dem Flurförderzeug 10 einen Steuerbefehl zum Einstellen des durch die Kollisionsschutzeinrichtung 20 erzeugten Schutzfelds.

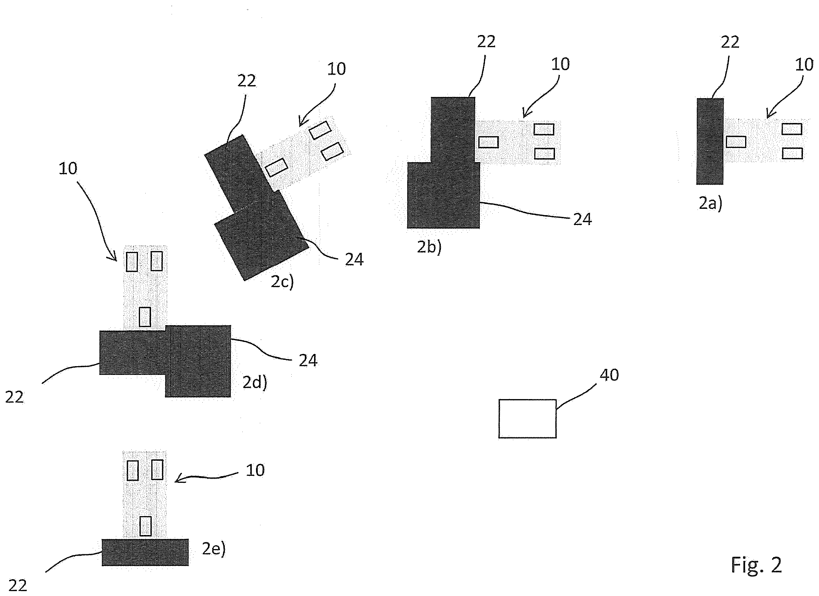

Anhand von Figur 2 wird im Folgenden das erfindungsgemäße Verfahren im Detail erläutert. In Figur 2 sind zwei Schutzfelder 22 und 24 ersichtlich. Im Schritt 2a) befindet sich das Flurförderzeug 10 in einer Geradeausfahrt, wobei lediglich ein vor dem Flurförderzeug angeordnetes erstes Schutzfeld 22 aktiviert ist. Im Schritt 2b) nähert sich das Flurförderzeug 10 einer Linkskurve an, befindet sich jedoch noch immer in der Geradeausfahrt. Die nun bevorstehende Fahrsituation ist folglich eine Kurvenfahrt. Die übergeordnete Steuereinheit 40 sendet dem Flurförderzeug 10 nun den Befehl, das Schutzfeld für die Kurvenfahrt zu aktivieren. Es wird somit das zweite Schutzfeld 24 in Fahrtrichtung gesehen linksseitig des Flurförderzeugs 10 aktiviert und damit die im Folgenden zu durchfahrende Kurve überwacht. Zudem wird in dem vorliegenden Ausführungsbeispiel das erste Schutzfeld 22 vergrößert. Im Schritt 2c) durchfährt das Flurförderzeug 10 nun mit den aktivierten Schutzfeldern 22, 24 eine 90° Linkskurve. Im Schritt 2d) hat das Flurförderzeug 10 bereits wieder eine Geradeausfahrt erreicht, wobei das zweite Schutzfeld 24 jedoch weiterhin aktiviert bleibt. Somit kann der Kurvenbereich weiterhin überwacht werden, was insbesondere bei Vorhandensein von dem Flurförderzeug nachlaufenden Anhängern sinnvoll ist, welche sich zu diesem Zeitpunkt noch in der Kurvenfahrt befinden können. In Schritt 2e) schließlich befindet sich das Flurförderzeug in der Geradeausfahrt in ausreichender Entfernung von der durchfahrenen Kurve, woraufhin das seitliche Schutzfeld 24 deaktiviert wird. Zudem wurde hier auch das erste Schutzfeld 22 wieder verkleinert. Das erste Schutzfeld 22 kann insbesondere dadurch vergrößert werden, dass es in Fahrtrichtung nach vorne verschoben wird. Beispielsweise kann hierfür ein Schutzfeldsensor der Kollisionsschutzeinrichtung verkippt werden, wobei sich der in Figur 1 gezeigte Winkel α dann verkleinert.

Durch das erfindungsgemäße Verfahren wird somit ein vorausschauendes Aktivieren bzw. Anpassen der Schutzfelder erreicht, was zu einer besonders hohen Kollisionssicherheit führt und zudem eine Durchfahrt von Kurven auch bei höheren Geschwindigkeiten erlaubt.

### Bezugszeichenliste

- 10: Flurförderzeug
- 12: Antriebsteil
- 16: Fahrzeugsteuerung
- 18: Sende- und Empfangseinheit
- 20: Kollisionsschutzvorrichtung
- 22: erstes Schutzfeld
- 24: zweites Schutzfeld
- 30: Hindernis
- 40: übergeordnete Steuereinheit

## Patentansprüche

1. Verfahren zur Steuerung mindestens eines Flurförderzeugs, mit den Schritten
- Bestimmen der Position des Flurförderzeugs (10) innerhalb einer vorbekannten, durch das Flurförderzeug (10) abzufahrenden Wegstrecke,
- Ermitteln einer bevorstehenden Fahrsituation in Abhängigkeit von der Position des Flurförderzeugs (10) sowie in Abhängigkeit von einem von dem Flurförderzeug (10) auszuführenden Fahrauftrag, wobei der Fahrauftrag von einer übergeordneten Steuereinrichtung an das Flurförderzeug übermittelt und in einer Fahrzeugsteuerung hinterlegt ist,
- Einstellen eines durch das Flurförderzeug (10) überwachten Schutzfelds (22, 24) auf Grundlage der bevorstehenden Fahrsituation noch bevor das Flurförderzeug (10) die Fahrsituation erreicht.

2. Verfahren nach Anspruch 1, **dadurch gekennzeichnet, dass** die Position des Flurförderzeugs (10) mittels einer übergeordneten Steuereinheit (40) bestimmt wird, die bevorstehende Fahrsituation durch die übergeordnete Steuereinheit (40) ermittelt wird und die übergeordnete Steuereinheit (40) einen Stellbefehl zum Einstellen des Schutzfeldes (22, 24) an das Flurförderzeug sendet.

3. Verfahren nach Anspruch 1 oder 2, **dadurch gekennzeichnet, dass** das mindestens eine Flurförderzeug (10) ein autonom oder automatisch fahrendes Flurförderzeug ist.

4. Verfahren nach einem der vorhergehenden Ansprüche, **dadurch gekennzeichnet, dass** die bevorstehende Fahrsituation eine Kurvenfahrt ist, wobei das Schutzfeld (24) bereits vor Eintritt des Flurförderzeugs (10) in die Kurvenfahrt in Richtung der Kurve positioniert wird.

5. Verfahren nach einem der vorhergehenden Ansprüche, **dadurch gekennzeichnet, dass** die bevorstehende Fahrsituation eine Fahrt mit erhöhter Geschwindigkeit ist, wobei das Schutzfeld bereits vor Eintritt des Flurförderzeugs (10) in die Fahrt mit erhöhter Geschwindigkeit einen größeren Bereich vor dem Flurförderzeug (10) abdeckt oder in Fahrtrichtung nach vorne verlagert wird.

6. Verfahren nach einem der vorhergehenden Ansprüche, **dadurch gekennzeichnet, dass** das überwachte Schutzfeld (22, 24) auch nach dem Verlassen der jeweiligen Fahrsituation weiter überwacht wird.

7. Verfahren nach Anspruch 6, **dadurch gekennzeichnet, dass** das Flurförderzeug (10) ein Schleppwagen eines Routenzugs ist, wobei der Schleppwagen über mindestens einen Anhänger verfügt, wobei das überwachte Schutzfeld (22, 24) auch nach dem Verlassen der jeweiligen Fahrsituation durch den Schleppwagen weiter überwacht wird bis der mindestens eine Anhänger ebenfalls die jeweilige Fahrsituation verlassen hat.

8. Verfahren nach einem der vorhergehenden Ansprüche, **dadurch gekennzeichnet, dass** der vom Flurförderzeug (10) eingeschlagene Lenkwinkel überwacht und das Flurförderzeug (10) gestoppt wird, wenn der eingeschlagene Lenkwinkel einen durch den Fahrauftrag vorgegebenen Maximalwinkel überschreitet.

9. Verfahren nach einem der vorhergehenden Ansprüche, **dadurch gekennzeichnet, dass** die vom Flurförderzeug (10) eingeschlagene Lenkrichtung überwacht und das Flurförderzeug (10) gestoppt wird, wenn die Lenkrichtung von einer durch den Fahrauftrag vorgegebenen Lenkrichtung abweicht.

10. Verfahren nach einem der vorhergehenden Ansprüche, **dadurch gekennzeichnet, dass** die vom Flurförderzeug eingenommene Geschwindigkeit überwacht und das Flurförderzeug gestoppt wird, wenn die Geschwindigkeit von einer durch den Fahrauftrag vorgegebenen Maximalgeschwindigkeit abweicht.

11. Verfahren nach einem der vorhergehenden Ansprüche, **dadurch gekennzeichnet, dass** der vom Flurförderzeug (10) eingeschlagene Lenkwinkel überwacht und das Schutzfeld (24) bei einer Kurvenfahrt des Flurförderzeugs abhängig von einem diskreten Lenkwinkel positioniert wird.

## Claims

1. A method for controlling at least one industrial truck, comprising the steps of
- Determining the position of the industrial truck (10) within a previously known path to be driven by the industrial truck (10),
- Identifying an impending driving situation depending on the position of the industrial truck (10) and depending on a driving task to be carried out by the industrial truck (10), wherein the driving task is transmitted to the industrial truck by a superordinate control apparatus and saved in a vehicle controller,
- Setting a protective field (22, 24) monitored by the industrial truck (10) on the basis of the impending driving situation even before the industrial truck (10) reaches the driving situation.

2. The method according to claim 1, **characterized in that** the position of the industrial truck (10) is determined by means of a superordinate control unit (40), the impending driving situation is identified by the superordinate control unit (40), and the superordinate control unit (40) sends a control command to the industrial truck to set the protective field (22, 24).

3. The method according to claim 1 or 2, **characterized in that** the at least one industrial truck (10) is an autonomously or automatically driven industrial truck.

4. The method according to one of the preceding claims, **characterized in that** the impending driving situation is driving in a curve, wherein the protective field (24) is positioned in the direction of the curve even before the industrial truck (10) begins driving into the curve.

5. The method according to one of the preceding claims, **characterized in that** the impending driving situation is driving with increased speed, wherein the protective field covers a greater range in front of the industrial truck (10) or is displaced forward in the direction of travel even before the industrial truck (10) begins driving with increased speed.

6. The method according to one of the preceding claims, **characterized in that** the monitored protective field (22, 24) continues to be monitored even after leaving the corresponding driving situation.

7. The method according to claim 6, **characterized in that** the industrial truck (10) is a towing vehicle of a tugger train, wherein the towing vehicle has at least one trailer, wherein the monitored protective field (22, 24) continues to be monitored even after the towing vehicle has left the corresponding driving situation until the at least one trailer has also left the corresponding driving situation.

8. The method according to one of the preceding claims, **characterized in that** the steering angle adopted by the industrial truck (10) is monitored and the industrial truck (10) is stopped when the adopted steering angle exceeds a maximum angle specified by the driving task.

9. The method according to one of the preceding claims, **characterized in that** the steering direction adopted by the industrial truck (10) is monitored and the industrial truck (10) is stopped when the steering direction deviates from a steering direction specified by the driving task.

10. The method according to one of the preceding claims, **characterized in that** the speed taken by the industrial truck is monitored and the industrial truck is stopped when the speed deviates from a maximum speed specified by the driving task.

11. The method according to one of the preceding claims, **characterized in that** the steering angle adopted by the industrial truck (10) is monitored and the protective field (24) is positioned depending on a discrete steering angle when the industrial truck is driving in a curve.

## Revendications

1. Procédé de commande d'au moins un chariot de manutention, comprenant les étapes suivantes
- détermination de la position du chariot de manutention (10) sur un trajet prédéfini à parcourir par le chariot de manutention (10),
- identification d'une situation de conduite imminente en fonction de la position du chariot de manutention (10) et en fonction d'une tâche de conduite à exécuter par le chariot de manutention (10), dans lequel la tâche de conduite est transmise au chariot de manutention par un dispositif de commande supérieur et enregistrée dans une commande de véhicule,
- réglage d'un champ de protection (22, 24) surveillé par le chariot de manutention (10) sur la base de la situation de conduite imminente avant l'atteinte de la situation de conduite par le chariot de manutention (10).

2. Procédé selon la revendication 1, **caractérisé en ce que** la position du chariot de manutention (10) est déterminé au moyen d'une unité de commande supérieure (40), la situation de conduite imminente est identifiée par l'unité de commande supérieure (40) et l'unité de commande supérieure (40) envoie un ordre de réglage au chariot de manutention pour le réglage du champ de protection (22, 24).

3. Procédé selon la revendication 1 ou 2, **caractérisé en ce que** l'au moins un chariot de manutention (10) est un chariot de manutention à conduite autonome ou automatique.

4. Procédé selon l'une des revendications précédentes, **caractérisé en ce que** la situation de conduite imminente est un conduite en virage, dans lequel le champ de protection (24) est positionné dans la direction du virage avant même l'entrée du chariot de manutention (10) dans la conduite en virage.

5. Procédé selon l'une des revendications précédentes, **caractérisé en ce que** la situation de conduite imminente est une conduite à vitesse augmentée, dans lequel le champ de protection couvre une plus grande zone devant le chariot de manutention (10) ou est décalé vers l'avant dans la direction de conduite avant même l'entrée du chariot de manutention (10) dans la conduite à vitesse augmentée.

6. Procédé selon l'une des revendications précédentes, **caractérisé en ce que** le champ de protection surveillé (22, 24) continue d'être surveillé après la sortie de la situation de conduite respective.

7. Procédé selon la revendication 6, **caractérisé en ce que** le chariot de manutention (10) est un véhicule tracteur d'un train logistique, dans lequel le véhicule tracteur a au moins une remorque, dans lequel le champ de protection surveillé (22, 24) continue d'être surveillé après la sortie de la situation de conduite respective par le véhicule tracteur jusqu'à ce que l'au moins une remorque soit également sortie de la situation de conduite respective.

8. Procédé selon l'une des revendications précédentes, **caractérisé en ce que** l'angle de direction suivi par le chariot de manutention (10) est surveillé et le chariot de manutention (10) est arrêté lorsque l'angle de direction suivi dépasse un angle maximal prédéfinie par la tâche de conduite.

9. Procédé selon l'une des revendications précédentes, **caractérisé en ce que** la direction suivie par le chariot de manutention (10) est surveillée et le chariot de manutention (10) est arrêté lorsque la direction suivie s'écarte d'une direction prédéfinie par la tâche de conduite.

10. Procédé selon l'une des revendications précédentes, **caractérisé en ce que** la vitesse adoptée par le chariot de manutention est surveillée et le chariot de manutention est arrêté lorsque la vitesse s'écarte d'une vitesse maximale prédéfinie par la tâche de conduite.

11. Procédé selon l'une des revendications précédentes, **caractérisé en ce que** l'angle de direction suivi par le chariot de manutention (10) est surveillé et le champ de protection (24) est positionné en fonction d'un angle de direction discret lors d'une conduite en virage du chariot de manutention.
